# EUROPÄISCHE PATENTSCHRIFT

(11) **EP 3 631 374 B1**
(45) Veröffentlichungstag und Bekanntmachung des Hinweises auf die Patenterteilung: **24.03.2021**
(21) Anmeldenummer: 18728124.1
(22) Anmeldetag: 29.05.2018
(51) Int. Cl.: G01D 11/24, G01D 4/02, G06F 21/87

(54) **SCHUTZGEHAEUSE FUER EINE PLATINE**
PROTECTIVE HOUSING FOR A CIRCUIT BOARD
BOÎTIER DE PROTECTION POUR UNE CARTE DE CIRCUIT IMPRIMÉ

(30) Priorität: 01.06.2017 DE 102017112079
(43) Veröffentlichungstag der Anmeldung: 08.04.2020
(73) Patentinhaber: Innogy SE, 45128 Essen (DE)
(72) Erfinder: HELNERUS, Stefan, 59821 Arnsberg (DE); MUELLER WINTERBERG, Christian, 46282 Dorsten (DE); WAFFNER, Juergen, 45307 Essen (DE); MEIER, Detlef, 45326 Essen (DE)
(74) Vertreter: Cohausz & Florack
(86) Internationale Anmeldenummer: PCT/EP2018/064033
(87) Internationale Veröffentlichungsnummer: WO 2018/219924

(56) Entgegenhaltungen:
- WO-A1-2016/137573
- WO-A2-2007/018761
- CN-U- 206 164 159
- CN-Y- 200 983 391
- DE-A1-102014 104 845
- DE-A1-102015 223 088

## Beschreibung

### Gebiet

Der Gegenstand betrifft ein Schutzgehäuse für einen auf einer Platine angeordneten Stromzähler mit den Merkmalen nach dem Oberbegriff des Anspruchs 1.

### Hintergrund

Ladesäulen zum Aufladen von Elektrofahrzeugen sind in der Regel bei Besitzern oder Nutzern von Elektrofahrzeugen zu Hause (z.B. in deren Garage), am Arbeitsplatz oder an öffentlich zugänglichen Parkplätzen angeordnet, um die Elektrofahrzeuge dort laden zu können. Ladesäulen können beispielsweise an einer Wand installiert sein, oder aber auch freistehend auf dem Boden befestigt sein. Um ein Aufladen von Elektrofahrzeugen zu ermöglichen, sind Ladesäulen elektrisch mit einer Energiequelle (z.B. einem Hausanschluss oder einer einen Zugang zu einem Energienetz ermöglichenden Station) verbunden.

Neben dem Aufladen von mit der Ladesäule elektrisch verbundenen Elektrofahrzeugen können mit Ladesäulen auch Batterien aufgeladen werden, die während des Ladens nicht in einem Elektrofahrzeug angeordnet sind, wie es beispielsweise Reservebatterien oder dergleichen sind.

Ladesäulen werden häufig von unterschiedlichen Nutzern verwendet. Insbesondere werden an öffentlichen Orten angeordnete Ladesäulen häufig von unterschiedlichen Nutzern verwendet. Aber auch im Bereich von beispielsweise an Arbeitsorten angeordneten Ladesäulen, z. B. in Tiefgaragen oder dergleichen werden die Ladesäulen mitunter von verschiedenen Nutzer zum Laden der jeweiligen Elektrofahrzeuge verwendet

Die DE102015223088 offenbart eine Ladestation für ein Kraftfahrzeug.

Wieviel elektrische Leistung zum Laden eines Elektrofahrzeugs bereitgestellt wurde, kann beispielsweise mit einem Stromzähler erfasst werden. Um eine Manipulation von diesem auszuschließen, ist es beispielsweise in Deutschland gesetzlich vorgeschrieben, dass die von einer Ladesäule umfassten Stromzähler gegen derartige Manipulationen geschützt sind. Heutige Ladesäulen haben in der Regel den Stromzähler im Inneren eines Gehäuses der Ladesäule angeordnet. Dies sichert den Stromzähler jedoch nur unzureichend vor einer möglichen, insbesondere mechanischen Manipulation. Zusätzlich unterliegen digitale Stromzähler einer verstärkten Manipulationsgefahr, denn z. B. durch ein Umprogrammieren oder dergleichen des Stromzählers kann dieser auch aus der Ferne manipuliert werden.

Es wäre wünschenswert, wenn derartige Stromzähler von Ladesäulen gegenüber Manipulationen besser geschützt wären.

### Allgemeine Beschreibung einiger beispielhafter Ausführungsformen

Vor dem Hintergrund des dargestellten Standes der Technik liegt dem Gegenstand die Aufgabe zugrunde, einen Stromzähler von Ladesäulen gegenüber Manipulationen besser zu schützen.

Zur Lösung der Aufgabe wird gegenständlich ein Schutzgehäuse für einen auf einer Platine angeordneten Stromzähler vorgeschlagen, wobei die Platine von einer Ladesäule für Elektrofahrzeuge umfasst ist, und mittels des Stromzählers die während eines Ladevorgangs verbrauchte elektrische Energie erfassbar ist, welches dadurch gekennzeichnet, dass das Schutzgehäuse die Platine sowohl auf der Unterseite als auch auf der Oberseite zumindest teilweise umschließt.

Es ist erkannt worden, dass eine Kapselung der Platine die auf der Platine angeordneten Bauteile wirksam vor einer Manipulation schützt. Zumindest ist der Teil der Platine von der Ladesäule, auf welcher der Stromzähler angeordnet ist, beidseitig, also sowohl auf der Unterseite als auch auf der Oberseite gegenüber einer insbesondere mechanischen Manipulation wirksam geschützt.

Derartige Kapselungen waren bisher nur einseitig auf der Platine einer Ladesäule als Berührschutz vorgesehen, so dass z. b. bei dem Öffnen von einem Gehäuse der Ladesäule die Gefahr eines Stromunfalls reduziert ist.

Um eine Manipulation des auf der Platine angeordneten Stromzählers ausschließen zu können, wird entsprechend vorgeschlagen, sowohl die Unterseite als auch die Oberseite der (z. B. plattenförmigen) Platine zu kapseln. Lediglich von der Platine umfassten Zuleitungen und/oder Ableitungen treten in die Kapselung des Stromzählers ein und/oder aus dieser heraus.

Beispielweise kann zumindest eine bestimmte Region auf der Platine, insbesondere derjenige Teil der Platine, welcher die Leistungselektronik und den Stromzähler der Ladesäule umfasst, sowohl auf der Oberseite der Platine als auch auf der Unterseite der Platine von dem Schutzgehäuse umschlossen ist. Beispielsweise umfasst diese bestimmte Region auf der Platine zudem eine oder mehrere Zuleitungen zur Übertragung von elektrischer Energie, welche von dem Stromzähler erfasst werden kann.

Der Stromzähler ist beispielsweise ein digitaler Stromzäher, der auch als Smartmeter bezeichnet wird. Unter einem Smartmeter wird ein intelligenter Zähler, im engeren Sinne ein Stromzähler, verstanden, mittels welchem beispielsweise digital Daten empfangbar und/oder sendbar sind. Hierzu kann der Smartmeter beispielsweise in ein Kommunikationsnetz eingebunden sein. Dies kann beispielsweise über eine von der Platine umfasste Kommunikationsschnittstelle realisiert sein. Der digitale Stromzähler kann beispielsweise über empfangene Daten gesteuert und/oder geregelt werden. Empfangene Daten können beispielsweise Tarifänderungen hinsichtlich des Preises von mittels der Ladesäule zur Verfügung gestellter elektrischer Energie betreffen. Gesendete Daten können beispielsweise den zum Laden eines Elektrofahrzeugs und/oder einer Batterie eines Elektrofahrzeugs verbrauchten Strom betreffen. Diese Daten können beispielsweise an eine Schaltzentrale von einem das Stromnetz betreibenden Energieversorgungsunternehmen gesendet werden.

Daten betreffend z. B. die zum Laden verbrauchte elektrische Energie können beispielsweise auch in kurzen zeitlichen Abständen an eine derartige Schaltzentrale übertragen werden. Hierdurch ist es beispielsweise möglich, das von dem Energieversorgungsunternehmen betriebene Stromnetz zu steuern und/oder zu regeln. Beispielweise kann eine (verbesserte) Netz- und Ressourcensteuerung des Stromnetzes ermöglicht werden. Entsprechend kann beispielsweise zeitnah auf konkrete Anforderungen, wie z. B. einen gesteigerter Verbrauch von elektrischer Energie und/oder eine geforderte Einspeisung von elektrischer Energie in das Stromnetz reagiert und/oder agiert werden. Auch der Nutzer eines Smartmeters, im Fall einer Ladesäule der Besitzer oder Nutzer eines Elektrofahrzeugs, welches die Ladesäule zum Laden nutzt, kann beispielsweise aktuelle und/oder protokollierte Informationen, z. B. den Ladevorgang des Elektrofahrzeugs betreffend, von dem Smartmeter übermittelt bekommen.

Ein Smartmeter ist insbesondere ein Bestandteil von intelligenten Stromnetzen, sogenannten Smartgrids.

In einer beispielhaften Ausgestaltung gemäß allen Aspekten des Gegenstandes umschließt das Schutzgehäuse den Stromzähler manipulationssicher.

Das Schutzgehäuse kapselt den auf der Platine von der Ladesäule angeordneten Stromzähler manipulationssicher. Um dies zu gewährleisten, ist das Schutzgehäuse beispielsweise derart ausgestaltet, dass das Schutzgehäuse nach dem Anordnen (z.B. Verbinden mit der Platine, oder Fixieren, so dass das Schutzgehäuse nicht von der Platine lösbar ist) nicht beschädigungsfrei von der Platine lösbar ist.

Eine mitunter notwendige Konfiguration des Stromzählers erfolgt in einer beispielhaften Ausgestaltung entsprechend vor dem Umschließen des Stromzählers durch das Schutzgehäuse.

Eine beispielhafte Ausgestaltung nach allen Aspekten des Gegenstandes sieht vor, dass auf der Platine zumindest eine Leistungselektronik angeordnet ist, die von dem Schutzgehäuse beidseitig von einem oberseitigen Teil des Schutzgehäuses und von einem unterseitigen Teil des Schutzgehäuses zumindest teilweise umschlossen ist.

Zumindest teilweise umschlossen im vorliegenden Sinn betrifft insbesondere, das notwendige elektrische Bauteile, wie etwa Zuleitungen und/oder Ableitungen der Leistungselektronik aus dem von dem Schutzgehäuse umschlossenen Teil der Platine herausragen können und insbesondere nicht vollständig von dem Schutzgehäuse umschlossen sind.

Mittels der Leistungselektronik kann beispielsweise eine Umformung von elektrischer Energie erfolgen. Beispielsweise kann eine Umrichtung (z. B. Gleichstrom in Wechselstrom oder Wechselstrom in Gleichstrom) oder eine Frequenzumrichtung (x Hz Wechselstrom in y Hz Wechselstrom) erfolgen.

Entsprechend kann eine derartige Leistungselektronik auf der Platine von der Ladesäule beispielsweise ein Gleichstromladen und/oder ein Wechselstromladen eines Elektrofahrzeugs mit derselben Ladesäule ermöglichen.

Beim Gleichstromladen wird Gleichstrom von der Ladesäule in eine Batterie eines Elektrofahrzeugs zum Laden eingespeist. Als Leistungselektronik umfasst die Platine beispielsweise einen Gleichrichter, welcher beispielsweise dreiphasigen Drehstrom vom Stromnetz in Gleichstrom umwandelt. Die Platine kann ferner eine Kommunikationsschnittstelle umfassen, welche z. B. mit einem Batteriemanagementsystem des Elektrofahrzeugs kommunizieren kann. Beispielsweise ist derart die Stromstärke des Ladevorgangs anpassbar, und/oder bei vollständig geladener Batterie des Elektrofahrzeugs ist der Ladevorgang abschaltbar. Insbesondere können Gleichstromanschlüsse der Ladesäule direkt mit den Anschlüssen der Batterien von Elektrofahrzeugen verbunden werden. Somit können beispielsweise verlustarm sehr hohe Ladeströme (z. B. 22 kW bis 150 kW) übertragen werden, um beispielsweise kurze Ladezeiten der Batterien zu ermöglichen.

Beim Wechselstromladen wird Wechselstrom von der Ladesäule in eine Batterie eines Elektrofahrzeugs zum Laden eingespeist. Der Wechselstrom ist beispielsweise einphasig. Als Leistungselektronik umfasst die Platine beispielsweise einen Wechselrichter, welcher Strom vom Stromnetz (z. B. dreiphasiger Drehstrom) in einphasigen Wechselstrom, falls erforderlich, umwandelt. Über diese Leistungselektronik der Platine von der Ladesäule ist die zum Laden vorgesehene Batterie eines Elektrofahrzeugs mit dem Stromnetz verbunden. Beim Wechselstromladen kann eine Ladeleistung von bis zu etwa 3,6 kW erreicht werden.

Alternativ oder zusätzlich kann ein Drehstromladen mittels der Leistungselektronik verwirklicht werden. Der Drehstrom ist beispielsweise dreiphasig. Der Drehstrom ist zum Laden eines Elektrofahrzeugs beispielsweise über die Leistungselektronik der Platine von der Ladesäule zu einer angeschlossenen Batterie eines Elektrofahrzeugs übertragbar. Die Ladestation ist beispielsweise an das dreiphasige Stromnetz angebunden.

Eine beispielhafte Ausgestaltung nach allen Aspekten des Gegenstandes sieht vor, dass der oberseitige Teil des Schutzgehäuses und der unterseitige Teil des Schutzgehäuses über eine oder mehrere Öffnungen in der Platine miteinander verbunden sind.

Beispielsweise können die einen oder mehreren Öffnungen kreisförmig sein. Die einen oder mehreren Öffnungen können beispielsweise über Bohrungen in der Platine realisiert sein. Zusätzlich oder alternativ können die einen oder mehreren Öffnungen schlitzförmig sein, z. B. in Form von Langlöchern oder dergleichen. Für den Fall, dass das Schutzgehäuse beispielsweise eine im Wesentlichen rechteckige Grundform aufweist, können beispielsweise zumindest zwei Öffnungen in der Platine vorgesehen sein. Zumindest ein Teil des unterseitigen und/oder des oberseitigen Teils des Schutzgehäuses ragt beispielsweise im angeordneten Zustand des Schutzgehäuses auf der Platine in die Öffnung hinein, wobei ein weiteres Teil des anderen Teils des Schutzgehäuses in das in die Öffnung hineinragende Teil eingreift. Ragt beispielsweise zumindest ein Teil des unterseitigen Teils des Schutzgehäuses in eine Öffnung der Platine hinein, greift zumindest ein Teil des oberseitigen Teils des Gehäuses in dieses Teil des unterseitigen Teils des Schutzgehäuses ein. Insbesondere ragt eine der Anzahl der Öffnungen in der Platine entsprechende Anzahle von entsprechend ausgebildeten Teilen des Schutzgehäuses (z. B. entsprechende von dem Schutzgehäuse hervorstehende Teile) in die Öffnungen hinein, so dass entsprechend ausgebildete Teile bzw. Abschnitte des anderen Schutzgehäuseteils in diese Teile des anderen Schutzgehäuseteils eingreifen können.

In einer beispielhaften Ausgestaltung gemäß allen Aspekten des Gegenstandes sind der oberseitige Teil des Schutzgehäuses und der unterseitige Teil des Schutzgehäuses mittels zumindest eines Verbindungselementes miteinander verbunden, wobei nach dem erstmaligen Herstellen der Verbindung mittels des zumindest einen Verbindungselementes die (hergestellte) Verbindung nicht zerstörungsfrei trennbar ist.

Die Verbindungselemente sind beispielsweise über die Öffnungen (z. B. Bohrungen) in der Platine miteinander verbunden. Einmal verbundene Verbindungselemente des oberseitigen Teils des Schutzgehäuses und des unterseitigen Teils des Schutzgehäuses sind nicht (mehr) zerstörungsfrei trennbar. Somit erfüllt eine derartige Verbindung zwischen dem oberseitigen Teil des Schutzgehäuses und dem unterseitigen Teil des Schutzgehäuses die Anforderungen an eine Manipulationssicherheit, da ein geöffnetes Schutzgehäuse an der Beschädigung bzw. Zerstörung zumindest der Verbindungselemente erkennbar ist.

Eine beispielhafte Ausgestaltung nach allen Aspekten des Gegenstandes sieht vor, dass das zumindest eine Verbindungselement ein zapfenartiges Element und/oder ein clipsartiges Element umfasst.

Das zapfenartige Element hat beispielsweise einen kreisförmigen Querschnitt. Das Gegenstück zu diesem Verbindungselement ist beispielsweise eine schlitzförmige Aufnahme. Der Durchmesser des zapfenartigen Elementes entspricht beispielsweise in etwa der Breite der schlitzförmigen Aufnahme. Insbesondere ist wenigstens das untere Ende der schlitzförmigen Aufnahme halbkreisförmig ausgestaltet.

Das zapfenartige Element kann beispielsweise in die schlitzförmige Aufnahme hinein geschoben werden. Anschließend rastet beispielsweise ein Teil (z. B. ein Endstück) des zapfenartigen Elementes in eine am unteren Ende der schlitzförmigen Aufnahme angeordnete Verdickung ein. Durch ein dem Prinzip eines Widerhakens ähnliches Verbinden kann gewährleistet werden, dass eine auf diesem Wege hergestellte Verbindung nicht trennbar bzw. lösbar ist.

Das clipsartige Element kann beispielsweise in ein zum Festrasten ausgebildetes Gegenstück einrasten. Das clipsartige Element kann dabei von dem unter- oder oberseitigen Teil des Schutzgehäuses umfasst sein, das Gegenstück kann entsprechend von dem anderen Teil des Schutzgehäuses umfasst sein. Beispielsweise weist das Gegenstück eine Ausbuchtung auf, in welche das clipsartige Element bei einer herstellten Verbindung zwischen diesen derart eingreift, dass ein Herausziehen nicht möglich ist. Das Verhindern des Herausziehens kann beispielsweise nach dem Prinzip eines Widerhakens realisiert sein.

In einer beispielhaften Ausgestaltung gemäß allen Aspekten des Gegenstandes ist das zumindest eine Verbindungselement ein Klebstoff oder eine Schweißnaht.

Zusätzlich oder alternativ sind der unterseitige und der oberseitige Teil des Schutzgehäuses mit einem Klebstoff oder einer Schweißnaht miteinander verbindbar. Beispielsweise sind der unterseitige und der oberseitige Teil des Schutzgehäuses mittels eines Laserschweißen miteinander verbindbar. Ein Laserschweißen ermöglicht beispielsweise ein unlösbares Verbinden des unterseitigen und des oberseitigen Teils des Schutzgehäuses unter Anwendung von Wärme. Die zum verschweißen notwendige Wärme wird beispielsweise mittels eines Lasers zugeführt. Beim Laserschweißen von Kunststoffen können beispielsweise Thermoplaste verwendet werden, da diese eine Schmelze bilden und entsprechend miteinander verschweißbar sind. Dementsprechend sind zumindest die Verbindungselemente beispielsweise aus Kunststoff, insbesondere aus einem Thermoplast. Zusätzlich oder alternativ bestehen der unterseitige und/oder der oberseitige Teil des Schutzgehäuses zumindest teilweise, insbesondere vollständig, aus Kunststoff, insbesondere aus einem Thermoplast.

Eine beispielhafte Ausgestaltung nach allen Aspekten des Gegenstandes sieht vor, dass das Schutzgehäuse einen Kunststoff umfasst. Insbesondere umfasst das Schutzgehäuse einen Thermoplast.

Alternativ oder zusätzlich umfasst oder besteht das Schutzgehäuse aus einem Material, welches nicht zerstörungsfrei öffenbar ist. Dieses Material kann beispielsweise zumindest einen Thermoplast umfassen. Das Schutzgehäuse kann beispielsweise aus einem spröden Material bestehen, so dass bei einem Manipulationsversuch, bei welchem versucht wird, das Schutzgehäuse zu öffnen, dieses beschädigt wird. Ein Thermoplast kann beispielsweise ein derartiges sprödes Material darstellen.

In einer beispielhaften Ausgestaltung gemäß allen Aspekten des Gegenstandes ist der von dem Schutzgehäuse umschlossene Stromzähler mittels einer berührungslosen Messung auslesbar.

Die Messung des Stromzählers kann beispielsweise mittels eines Shunt Widerstandes und/oder einer Hallsonde erfolgen. Zusätzlich oder alternativ, kann der Stromzähler über eine Kommunikationsschnittstelle Daten (z. B. Zählerdaten indikativ für eine verbrauchte elektrische Leistung) übermitteln. Dies ist insbesondere möglich, wenn der Stromzähler ein digitaler Stromzähler (z. B. ein Smartmeter) ist.

Ein Shunt Widerstand ist beispielsweise ein niederohmiger elektrischer Widerstand, der zur Messung eines elektrischen Stromes verwendbar ist. Strom durchfließt beispielsweise den Shunt Widerstand, und verursacht einen proportionalen Spannungsabfall, der messbar ist. Je kleiner die Spannung ist, die an dem Shunt Widerstand abfällt, desto weniger beeinflusst die Messung den Stromkreis, so dass insbesondere die Fehleranfälligkeit gering ist.

Der Shunt Widerstand ist beispielsweise in die Leitung mit dem zu messenden Strom einbaubar.

Eine Hallsonde, auch als Hall-Sensor bezeichnet, nutzt den Hall-Effekt zur Messung von Magnetfeldern. Wird eine Hallsonde beispielsweise von einem Strom durchflossen und in ein beispielsweise senkrecht dazu verlaufendes Magnetfeld gebracht, ergibt sich eine Ausgangsspannung der Hallsonde, die proportional zum Produkt aus magnetischer Flussdichte und Strom ist. Dies wird auch als der sogenannte Hall-Effekt bezeichnet.

Um die Hallsonde als Strommesser einzusetzen, kann die Hallsonde beispielsweise an einer stromführenden Leitung der Platine angeordnet werden. Durch die Messung des von der stromführenden Leitung resultierenden Magnetfeldes kann entsprechend die Messung des Stromes erfolgen. Insbesondere liefert die Hallsonde auch dann eine Ausgangsspannung als Signal, wenn das Magnetfeld, in dem es sich befindet, konstant ist, da beispielsweise der von der Leitung geführte Strom konstant ist, wie dies mitunter bei dem Laden von Elektrofahrzeugen der Fall ist.

Eine beispielhafte Ausgestaltung nach allen Aspekten des Gegenstandes sieht vor, dass das Schutzgehäuse MID-konform ausgebildet ist.

Unter spritzgegossenen Schaltungsträgern (Molded Interconnect Devices) kurz MID, werden im Sinne des Gegenstandes spritzgegossene Kunststoffbauteile bezeichnet, welche aufgebrachte metallische Leiterbahnen (z. B. Leitungen) umfassen. Die Schaltungsträger dienen beispielsweise als Schaltungsträger für elektronische Bauteile (z. B. Leistungselektronik, Stromzähler, oder dergleichen). In einer beispielhaften Ausgestaltung nach allen Aspekten ist beispielsweise die Platine ein derartiger Schaltungsträger.

Das Schutzgehäuse ist insbesondere MID-konform ausgebildet, wenn die von der MIDkonformen Platine umfassten Leitungen und/oder die elektronischen Bauteile durch das zumindest teilweise Umschließen von dem Schutzgehäuse in ihrer Funktion nicht beeinträchtigt werden.

In einer beispielhaften Ausgestaltung gemäß allen Aspekten des Gegenstandes umfasst die Platine zumindest eines der folgenden Bauteile, wobei die Bauteile insbesondere die Leistungselektronik einer Ladesäule betreffen:
(i) Stromwandler zur (a) Messung und (b) zum Überwachen der Ladeströme;
(ii) Kommunikationsschnittstelle;
(iii) Spannungsversorgung;
(iv) Steuerungsschaltung;
(v) Kryptographieschaltung;
(vi) oder eine Kombination hiervon.

Der von der Platine umfasste Stromwandler ist insbesondere zur Messung der Ladeströme und/oder zum Überwachen der Ladeströme ausgebildet. Insbesondere wandelt der Stromwandler einen Eingangsstrom in einen proportional herabgesetzten Strom für den Stromzähler.

Die von der Platine umfasste Kommunikationsschnittstelle ist insbesondere zur Signalisierung von Informationen an einen Besitzer oder Nutzer eines Elektrofahrzeugs ausgebildet. Beispielsweise kann mittels der Kommunikationsschnittstelle eine Statusinformation z. B. betreffend ein mit der Ladesäule verbundenes Elektrofahrzeug kommuniziert werden. Die Statusinformation ist beispielsweise indikativ für eine Information hinsichtlich eines an der Ladesäule angeschlossenen Elektrofahrzeugs. Beispielsweise kann die Statusinformation Informationen hinsichtlich des Ladevorgangs, wie etwa einen mitunter aufgetretenen Fehler und/oder einen beendeten Ladevorgang, oder eine Kombination hiervon umfassen. Die Kommunikationsschnittstelle kann beispielsweise mittels eines Datenkanals Informationen des Stromzählers und/oder Informationen betreffend einen Ladevorgang (z. B. von einem Batteriemanagementsystem eines Elektrofahrzeugs übertragene Informationen und/oder von einem Nutzer der Ladesäule eingegebene Informationen, um einige nicht-limitierende Beispiele zu nennen) empfangen bzw. senden. Zusätzlich oder alternativ können Informationen des Stromzählers beispielsweise inidikativ für von dem Stromzähler erfasste Informationen (z. B. verbrauchte elektrische Energie) und/oder Statusinformationen, die beispielsweise von der Kommunikationsschnittstelle an eine Warte bzw. Schaltzentrale des Stromnetzes übertragen werden.

Die von der Platine umfasste Spannungsversorgung ist insbesondere zum Speisen mit elektrischer Energie von elektronischen Bauteilen der Ladesäule, insbesondere von der Platine umfassten Bauteilen, ausgebildet, wie beispielsweise eine von der Ladesäule umfasste Anzeigevorrichtung, welche z. B. zum Wiedergeben von Informationen für einen Besitzer oder Nutzer eines Elektrofahrzeugs ausgebildet ist. Die Spannungsversorgung ist beispielsweise ein Netzteil, welches entsprechend die Bauteile der Ladesäule mit elektrischer Energie speisen kann.

Die Steuerungsschaltung kann beispielsweise einen Prozessor und zumindest einen Speicher umfassen. Die Steuerschaltung kann eine Vielzahl von Funktionen erfüllen. Mittels der Steuerschaltung können insbesondere von anderen Bauteilen (z. B. Stromwandler, Stromzähler, Sensoren, um einige nicht limitierende Beispiele zu nennen) erfasste Signale ausgewertet werden. Ferner kann mit der Steuerschaltung beispielsweise die Kommunikationsschnittstelle gesteuert werden, um beispielsweise Informationen an weitere Geräte (z. B. eine Warte bzw. Steuerzentrale des Stromnetzes, oder an eine Anzeigevorrichtung zum Wiedergeben von Informationen von der Ladesäule, um einige nicht limitierende Beispiele zu nennen) übertragen werden. Die Steuerschaltung kann beispielsweise von der Platine umfasst sein. Insbesondere sind die von der Steuerschaltung steuerbaren Bauteile der Ladesäule, insbesondere die von der Platine umfassten Bauteile, mit Steuerleitungen mit der Steuerschaltung verbunden. Insbesondere umfasst die Steuerschaltung nur einen Prozessor für sämtliche Funktionen, wie z. B. Steuerung von Messungen, Steuerung des Stromzählers und Steuerung eines Ladevorgangs von einem Elektrofahrzeug.

Die Kryptographieschaltung umfasst insbesondere einen sogenannten Crypto-Chip zum Verschlüsseln bzw. Entschlüsseln von z. B. von der Kommunikationsschnittstelle übertragenen bzw. empfangenen Daten. Insbesondere umfasst die Platine nur einen Crypto-Chip. Insbesondere kann es sich beispielsweise um einen Pulsweitenmodulations-Controller (PWM-Controller) nach der International Electrotechnical Commission (IEC) 61851 Mode III oder IEC 62196 Norm handeln.

Die IEC 61851 bzw. die IEC 62196 ist eine internationale Norm für eine Reihe der Steckertypen und Lademodi für Elektrofahrzeuge.

Die Norm IEC 62196 übernimmt die IEC-61851-Definition für einen Signalpin, der den Ladestrom schaltet, wonach eine Ladesäule spannungslos bleibt, bis ein Elektrofahrzeug mit dem Ladeanschluss der Ladesäule verbunden wird. Während des Ladevorgangs kann dann das angeschlossene Elektrofahrzeug aus Sicherheitsgründen nicht in Betrieb genommen werden.

Bei dem Mode III der vorstehend angeführten IEC-Normen handelt es sich um Lademodi für eine Schnellladung mit bis zu 250 A Ladestrom. Mittels eines PWM-Controllers wird der maximal zulässige Ladestrom oder die Verfügbarkeit digitaler Kommunikation kodiert. Dies ermöglicht beispielsweise ein gesteuertes Laden von Elektrofahrzeugen, wobei während des Ladens Informationen z. B. zwischen der Ladesäule und einem an der Ladesäule angeschlossenen Elektrofahrzeug übertragbar sind, so dass beispielsweise der Ladevorgang steuer- und/oder regelbar ist.

Eine beispielhafte Ausgestaltung nach allen Aspekten des Gegenstandes sieht vor, dass die Platine zur Stromführung von 32 A bis 250 A, insbesondere von 50 A bis 150 A, bevorzugt von 75 A bis 100 A ausgebildet ist. Insbesondere umfasst die Platine Leitungen (z. B. Leiterbahnen) die derart ausgebildet sind, dass eine Stromführung von 32 A bis 250 A, insbesondere von 50 A bis 150 A, bevorzugt von 75 A bis 100 A möglich ist. Beispielsweise müssen die von der Platine umfassten Leitungen eine adäquate Querschnittsfläche aufweisen.

Insbesondere um die bei dem Laden von Elektrofahrzeugen mitunter auftretenden hohen Ladeströme übertragen zu können, können die von der Platine umfassten Leitungen eine Stromführungsfähigkeit von mehreren hundert Ampere aufweisen.

In einer beispielhaften Ausgestaltung gemäß allen Aspekten des Gegenstandes sind eine oder mehrere Zuleitungen und/oder eine oder mehrere Ableitungen der Platine mit zumindest einem von dem Schutzgehäuse zumindest teilweise umschlossenen Bauteil, z. B. dem Stromzähler, verbunden.

In einer beispielhaften Ausgestaltung gemäß allen Aspekten des Gegenstandes weist die Platine eine Dicke von 0,5 cm bis 2 cm, bevorzugt von 0,75 cm bis 1,5 cm, besonders bevorzugt von 1 cm bis 1,25 cm auf.

Um die Stromführungsfähigkeit der hohen Ladeströme gewährleisten zu können, weist die Platine eine im Vergleich zu üblichen Platinen von beispielsweise Heimelektrogeräten große Dicke auf. Damit die von der Platine umfassten Leitungen dazu ausgebildet sind, hohe Ladeströme von mitunter mehr als 100 A übertragen zu können, weisen die von der Platine umfassten Leitungen (z. B. Leiterbahnen) eine Dicke von 0, 3 cm bis 1,8 cm, bevorzugt von 0,5 cm bis 1,3 cm, besonders bevorzugt von 0,6 cm bis 1 cm auf. Entsprechend sind die Leitungen geringfügig dünner ausgebildet als die Platine. Die zusätzliche Dicke der Platine dient beispielsweise als Isolationsschicht.

Eine beispielhafte Ausgestaltung nach allen Aspekten des Gegenstandes sieht vor, dass der Stromzähler derart von der Kommunikationsschnittstelle getrennt ist, dass ein elektronischer Zugriff auf den Stromzähler nicht möglich ist.

Für den Fall, dass die Platine neben dem Stromzähler eine Kommunikationsschnittstelle umfasst, über welche beispielsweise die Ladesäule Informationen (z. B. betreffend einen Ladevorgang) an ein weiteres Gerät kommunizieren kann, ist der Stromzähler von dieser Kommunikationsschnittstelle entkoppelt bzw. getrennt. Eine derartige Entkopplung des Stromzählers von der Kommunikationsschnittstelle erhöht die Sicherheit des Stromzählers gegen Manipulationsversuche. Insbesondere eine digitale Manipulation von außen, beispielsweise durch unberechtigte Dritte (z. B. sogenannte Hacker) kann durch eine Trennung des Stromzählers von der Kommunikationsschnittstelle wirksam unterbunden werden. Besonders effektiv ist eine vollständige mechanische Trennung des Stromzählers von der Kommunikationsschnittstelle. Diese kann beispielsweise realisiert sein, indem keine Datenleitung zwischen dem Stromzähler und der Kommunikationsschnittstelle besteht. Um Daten, Signale und/oder Informationen von dem digitalen Stromzähler bzw. an den digitalen Stromzähler übertragen zu können, können diese Daten, Signale und/oder Informationen beispielsweise über die Steuerschaltung von dem digitalen Stromzähler über die Steuerschaltung versendet werden bzw. an den digitalen Stromzähler über die Steuerschaltung gesendet werden.

Ein Schutzgehäuse, welches eine Platine mit den vorstehenden Merkmalen derart zumindest teilweise umschließt, stellt sicher, dass der von dem Schutzgehäuse umschlossene Stromzähler sowohl gegen eine mechanische als auch gegen eine digitale Manipulation geschützt ist.

Die Aufgabe wird ferner durch ein Smartmeter gelöst, der Smartmeter umfassend zumindest ein gegenständliches Schutzgehäuse.

Der Einsatz eines Smartmeters als digitalen Stromzähler eröffnet beispielsweise die Möglichkeit, die von der Ladesäule als Last an das Stromnetz gekoppelte Batterie eines Elektrofahrzeugs als schaltbare Last auszugestalten. Entsprechend kann beispielsweise der Ladestrom verringert oder erhöht werden, z. B. in Abhängigkeit von weiteren in dem Stromnetz auftretenden Lasten. Überschüssige Energie kann beispielsweise durch einen höheren Ladestrom in eine Batterie eines Elektrofahrzeugs gespeist werden. Mittels eines Smartmeters ist in der Regel auch eine Messung der Spannung möglich, wobei die Messdaten beispielsweise an eine Steuerzentrale des Stromnetzes übermittelbar sind. Auch auf Basis dieser Daten kann ein Lastmanagement seitens des Stromnetzes durchgeführt werden.

Zusätzlich oder alternativ kann beispielsweise durch den Smartmeter der Netzzustand an diesem Punkt des Stromnetzes bestimmt werden. Über eine Kommunikationsschnittstelle kann beispielsweise eine entsprechende Information an eine Warte bzw. Steuerzentrale des Stromnetzes übermittelt werden. Da insbesondere zahlreiche Ladesäule in das Stromnetz eingebunden sind, kann somit eine detaillierte Überwachung des Netzzustandes durchgeführt werden.

Ein Smartmeter ist ferner zur Integration in ein sogenanntes Smartgrid, also ein intelligentes Stromnetz, ausgebildet. Entsprechend kann beispielsweise eine Smartgrid-konforme Integration der Ladesäule durch die verwendete Elektronik der Ladesäule sichergestellt sein.

Nachfolgend wird der Gegenstand anhand einer Ausführungsbeispiele zeigenden Zeichnung näher erläutert. In der Zeichnung zeigen:
- Fig. 1: eine Schnittansicht einer Platine mit einem gegenständlichen Schutzgehäuse nach einem Ausführungsbeispiel;
- Fig. 2: eine Draufsicht der Platine nach Fig. 1 ohne ein gegenständliches Schutzgehäuse;
- Fig. 3: eine Schnittansicht einer Platine mit einem gegenständlichen Schutzgehäuse nach einem weiteren Ausführungsbeispiel;
- Fig. 4: eine Untersicht der Platine nach Fig. 3 ohne ein gegenständliches Schutzgehäuse;
- Fig. 5: eine schematische Ansicht einer Platine mit einem gegenständlichen Schutzgehäuse nach einem Ausführungsbeispiel; und
- Fig. 6: ein Blockdiagramm eines Smartmeters mit einer Platine und einem gegenständlichem Schutzgehäuse nach einem Ausführungsbeispiel.

### Detaillierte Beschreibung einiger beispielhafter Ausführungsformen

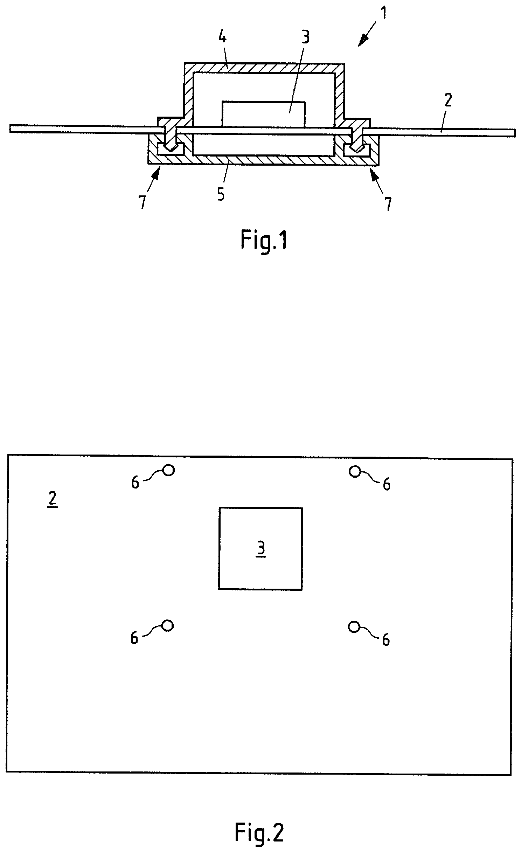

Fig. 1 zeigt eine Schnittansicht einer Platine mit einem gegenständlichen Schutzgehäuse nach einem Ausführungsbeispiel.

Auf der Platine 2 ist vorliegend ein Stromzähler 3 angeordnet. Ferner ist ein Schutzgehäuse 1 dargestellt. Das Schutzgehäuse 1 umschließt die Platine 2 sowohl auf der Oberseite als auch auf der Unterseite zumindest teilweise.

Das Schutzgehäuse 1 umfasst einen oberseitigen Teil 4 und einen unterseitigen Teil 5. Das Schutzgehäuse ist derart auf der Platine 2 angeordnet, dass der Stromzähler 3 (vorliegend ein digitaler Stromzähler in Form eines Mikrochips) von dem Schutzgehäuse 1 vollständig umschlossen ist.

Das Schutzgehäuse 1 umschließt zumindest einen Teil der Platine 2, wobei auf dem von dem Schutzgehäuse 1 umschlossenen Teil der Platine 2 beispielsweise die Leistungselektronik einer Ladesäule angeordnet.

Stromzähler, wie der vorliegende Stromzähler 3, die von einer Platine 2 einer Ladesäule umfasst sind, erfassen insbesondere die zum Laden eines Elektrofahrzeugs aufgewendete elektrische Leistung. Auf Basis dieser erfassten Informationen kann beispielsweise eine Abrechnung der von einem Besitzer oder Nutzer eines Elektrofahrzeugs zum Laden verbrauchten elektrischen Energie erfolgen.

Bei Ladesäulen ist es vorgeschrieben, dass Stromzähler manipulationssicher von der Ladesäule umfasst sind. Der Hintergrund hierfür ist beispielsweise, dass kein Diebstahl von elektrischer Energie oder dergleichen erfolgen soll. In Deutschland schreibt deswegen beispielsweise das Energiewirtschaftsgesetz (§ 14 a) vor, dass ein von einer Ladesäule separat umfasster Stromzähler manipulationssicher sein muss. Ferner darf der Stromzähler von außen nicht beeinflussbar sein. Der Begriff "von außen" kann sich sowohl auf einen digitalen Zugriff auf den Stromzähler als auch auf eine mechanische Manipulation des Stromzählers beziehen. Alternativ könnte zwar die zum Laden eines Elektrofahrzeugs verwendete elektrische Energie seitens einer zentralen Stelle (z. B. Warte) des Stromnetzes erfasst werde, eine derartige Erfassung ist jedoch aufwendig.

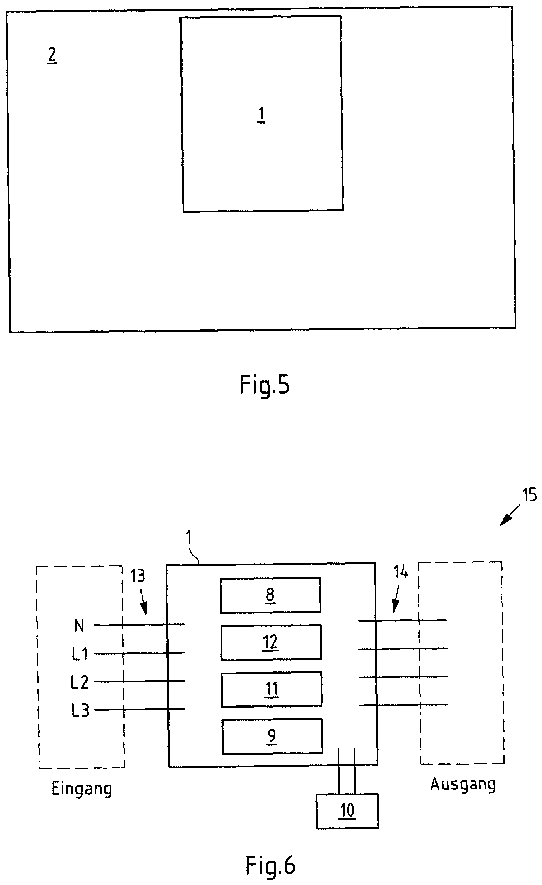

Entsprechend umschließt das Schutzgehäuse 1 den auf der Platine 2 angeordneten Stromzähler 3 manipulationssicher. Die Manipulationssicherheit begründet sich insbesondere auf zwei Merkmalen. Zum einen ist der Stromzähler 3 sowohl auf der Oberseite der Platine, als auch auf der Unterseite der Platine 2 von dem Schutzgehäuse 1 vollständig umschlossen. Dies schließt insbesondere eine mechanische Manipulation des Stromzählers aus, da der Stromzähler 3 durch das Schutzgehäuse 1 von außen nicht zugänglich ist. Zum anderen ist der Stromzähler 3 vorliegend nicht unmittelbar mit einer Kommunikationsschnittstelle (vgl. Fig. 6) verbunden, so dass auch ein digitaler Zugriff, beispielsweise über die Kommunikationsschnittstelle (z. B. Kommunikationsschnittstelle 10 nach Fig. 6) auf den Stromzähler 3 nicht möglich ist.

Um eine Manipulation erkennen zu können, besteht das Schutzgehäuse 1 aus einem Material, welches sich nicht zerstörungsfrei öffnen lässt. Sollte also ein mechanischer Zugriff auf den Stromzähler 3 versucht und/oder durchgeführt worden sein, ist dies an einer Beschädigung des Schutzgehäuses zweifelsfrei zu erkennen.

Da von dem Schutzgehäuse 1 die Platine 2 zumindest teilweise umschlossen ist, müssen der oberseitige Teil 4 und der unterseitige Teil 5 des Schutzgehäuses 1 miteinander verbunden sein.

Vorliegend sind der oberseitige Teil 4 und der unterseitige Teil 5 des Schutzgehäuses 1 mittels Verbindungselementen 7 miteinander verbunden. Der oberseitige Teil 4 des Schutzgehäuses 1 umfasst zapfenartige Verbindungselement, der unterseitige Teil 4 entsprechend ausgebildete Gegenstücke. Nach dem Prinzip eines Widerhakens greifen die zapfenartigen Verbindungselemente des oberseitigen Teils 4 in die von dem unterseitigen Teil 5 des Schutzgehäuses 1 umfassten Gegenstücke ein. Nach einer hergestellten Verbindung zwischen dem oberseitigen Teil 4 und dem unterseitigen Teil 5 des Schutzgehäuses ist diese Verbindung nicht mehr lösbar. In der in der Fig.1 dargestellten Ausgestaltung sind die aus dem unterseitigen Teil 5 herausragenden zapfenartigen Elemente von dem unterseitigen Teil 5 des Schutzgehäuses umschlossen.

Fig. 2 zeigt eine Draufsicht der Platine nach Fig. 1 ohne ein gegenständliches Schutzgehäuse. Auf der Platine 2 ist der Stromzähler 3 angeordnet. Um den Stromzähler herum weist die Platine vorliegend vier Öffnungen 6 auf. Die Öffnungen 6 sind beispielsweise Bohrungen durch die Platine 2 hindurch. Über die Öffnungen 6 in der Platine 2 sind der oberseitige Teil 4 und der unterseitige Teil 5 des Schutzgehäuses 1 miteinander verbindbar. In der in Fig. 1 dargestellten Schnittansicht ist zu erkennen, dass sich der oberseitige Teil 4 des Schutzgehäuses 1 bis zur Oberfläche der Platine 2 erstreckt, und der unterseitige Teil 5 des Schutzgehäuses 1 sich ebenfalls bis zur untenliegenden Oberfläche der Platine 2 erstreckt.

Um den oberseitigen Teil 4 und den unterseitigen Teil 5 des Schutzgehäuses miteinander zu verbinden, können Verbindungselemente 7 verwendet werden. Die Verbindungselemente 7 können beispielsweise als zapfenartige Elemente oder clipsartige Elemente ausgebildet sein. Entweder können die zapfenartigen Elemente oder clipsartigen Elemente von dem oberseitigen Teil 4 oder alternativ von dem unterseitigen Teil 5 des Schutzgehäuses 1 umfasst sein. In Fig. 1 sind diese von dem oberseitigen Teil 4 des Schutzgehäuses umfasst. Derjenige Teil des Schutzgehäuses 1, welcher nicht die zapfenartigen Elemente oder clipsartigen Elemente umfasst, weist korrespondierend ausgebildete Gegenstücke (z. B. Aufnahmen) auf, in welche die Verbindungselemente 7 eingreifen können. In Fig. 1 sind diese von dem unterseitigen Teil 5 des Schutzgehäuses 1 umfasst. Dabei erstrecken sich die Verbindungselemente 7 durch die Öffnungen 6. Durch eine entsprechende Ausgestaltung der Verbindungselemente 7 kann sichergestellt werden, dass eine einmal hergestellte Verbindung zwischen dem oberseitigen Teil 4 und dem unterseitigen Teil 5 des Schutzgehäuses 1 nicht reversibel lösbar bzw. trennbar ist.

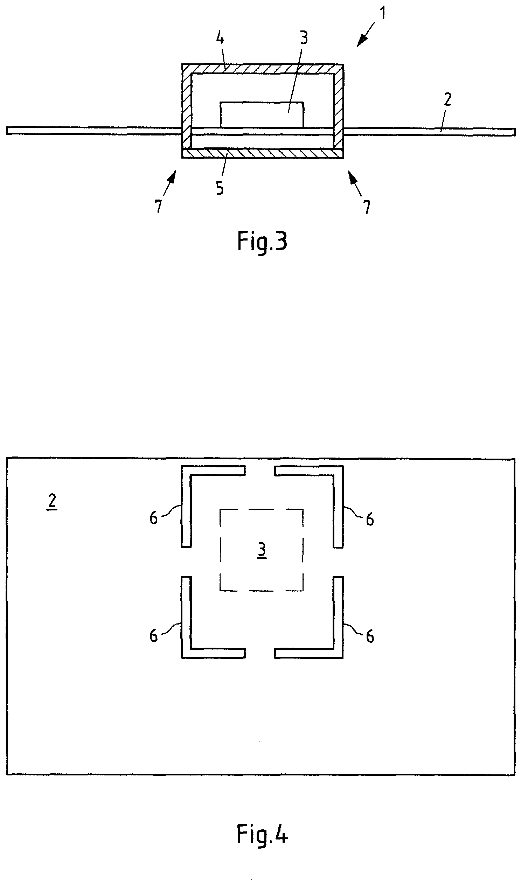

Fig. 3 zeigt eine Schnittansicht einer Platine mit einem gegenständlichen Schutzgehäuse nach einem weiteren Ausführungsbeispiel.

Im Gegensatz zu dem in Fig. 1 dargestellten Ausführungsbeispiel, erstreckt sich der oberseitige Teil 4 des Schutzgehäuses 1 von der Oberseite der Platine 2 bis über die Unterseite der Platine 2 hinaus. Entsprechend ragt ein auf der Platine 2 angeordneter oberseitiger Teil 4 des Schutzgehäuses 1 von der Unterseite der Platine 2 hervor.

Um den Durchgriff durch die Platine 2 des oberseitigen Teils 4 des Schutzgehäuses 1 hindurch zu ermöglichen, weist die Platine 2 beispielsweise eine oder mehrere Öffnungen 6 auf, die insbesondere in Form von schlitzartigen Langlöchern ausgebildet sind, wie in Fig. 4 schematisch dargestellt ist.

Fig. 4 zeigt eine Untersicht der Platine nach Fig. 3 ohne ein gegenständliches Schutzgehäuse. Der Stromzähler 3 ist schematisch durch ein unterbrochenes Quadrat angedeutet, da der Stromzähler 3 auf der Oberseite der Platine 2 angeordnet ist. Entsprechend ist der Stromzähler 3 in der Darstellung gemäß Fig. 4 nicht explizit zu erkennen.

Damit das Schutzgehäuse 1 an der Platine 2 fixiert ist und nicht in Richtung der Oberseite und/oder der Unterseite der Platine 2 verschiebbar ist, kann beispielsweise der durch die Öffnung 6 durchragende oberseitige Teil 4 des Schutzgehäuses an seiner durch die Platine 2 durchragenden Seitenfläche ein Fixierelement (z. B. eine Vertiefung und/oder eine Ausbuchtung aufweisen). Die Vertiefung und/oder die Ausbuchtung weist insbesondere eine zu der Dicke der Platine 2 korrespondierende Höhe auf, so dass die Platine 2 in dieses Fixierelement des oberseitigen Teils 4 der Platine 2 eingreifen kann. Alternativ für den Fall, dass der unterseitige Teil 5 des Schutzgehäuses 1 durch die Öffnung 6 in der Platine 2 hindurchragt, kann ein entsprechendes Fixierelement an dem unterseitigen Teil 5 des Schutzgehäuses 1 vorgesehen bzw. von diesem umfasst sein.

Die schlitzartigen Öffnungen 6 weisen zwischen ihnen Unterbrechungen auf. Diese Stelle der Platine 2, die nicht mit schlitzartigen Öffnungen 6 versehen sind, können ein Aufliegen des Schutzgehäuses 1 ermöglichen, insbesondere um ein Verschieben des Schutzgehäuses 1 in Richtung der Oberseite und/oder der Unterseiten der Platine 2 zu vermeiden.

Fig.5 zeigt eine schematische Ansicht einer Platine mit einem gegenständlichen Schutzgehäuse nach einem Ausführungsbeispiel.

Schematisch dargestellt ist ein geschlossenes Schutzgehäuse 1 auf der Platine 2. Das Schutzgehäuse 1 überdeckt dabei zumindest einen Teil der Platine 2. Da das Schutzgehäuse sowohl den Teil der Oberseite als auch diesen Teil der Unterseite der Platine 2 umschließt, entspricht die dargestellte Ansicht sowohl einer Draufsicht als auch einer Untersicht.

Fig. 6 zeigt ein Blockdiagramm eines Smartmeters mit einer Platine und einem gegenständlichem Schutzgehäuse nach einem Ausführungsbeispiel.

Das vorliegende Smartmeter 15 ist beispielsweise von einer Ladesäule zum Laden eines Elektrofahrzeugs umfasst. Mittels des Smartmeters 15 kann beispielsweise die während eines Ladevorgangs von einem Elektrofahrzeug benutzte elektrische Energie erfasst werden. Ferner können Informationen von einem mit der Ladesäule verbundenen Elektrofahrzeug von dem Smartmeter 15 erfasst werden. Beispielsweise kann das Smartmeter 15 erfassen, wie groß die momentan von einem Elektrofahrzeug verursachte Last für das Stromnetz ist. Über eine Kommunikationsschnittstelle können derartige Informationen z. B. an einer Zentrale des Stromnetzes übermittelt werden. Beispielsweise eröffnet dies die Möglichkeit, die Last (z. B. die Batterie des Elektrofahrzeugs) zu steuern, indem beispielsweise der zum Laden des Elektrofahrzeugs verwendete Ladestrom vergrößert oder verringert wird. Entsprechend ist das Smartmeter 15 insbesondere in ein sogenanntes Smartgrid, also ein intelligentes Stromnetz, integrierbar.

Das Smartmeter 15 umfasst eine Platine, welche von einem Schutzgehäuse 1 zumindest teilweise beidseitig umschlossen ist. In Fig. 6 ist der von dem Schutzgehäuse 1 umschlossenen Teil der Platine schematisch dargestellt. Insbesondere ist auf dem von dem Schutzgehäuse 1 umschlossenen Teil der Platine zumindest ein Bauteil einer Leistungselektronik angeordnet. Vorliegend sind auf dem von dem Schutzgehäuse 1 umschlossenen Teil der Platine ein Stromwandler 8, eine Kryptographieschaltung 9, eine Steuerschaltung 11 und eine Kommunikationsschnittstelle 9umfasst. Von außerhalb des Schutzgehäuses 1 erstrecken sich Zuleitungen 13 in den von dem Schutzgehäuse 1 umschlossenen Teil der Platine. Ferner sind Ableitungen 14 aus dem von dem Schutzgehäuse umschlossenen Teil der Platine nach außerhalb hinaus geführt. Die Zuleitungen 13 führen insbesondere in die Eingangsseite der Leistungselektronik-Bauteile hinein. Die Ableitungen 14 führen insbesondere von der Ausgangsseite der Leistungselektronik-Bauteile hinweg. Beispielsweise umfassen die Zuleitungen 13 eine dreiphasige Wechselstromzuleitung, mit den Adern N (Nullleiter), L1, L2 und L3 als stromführende Leitungen. Sowohl die Zuleitungen 13 als auch die Ableitungen 14 können als Leiterbahnen der Platine ausgebildet sein. Das Smartmeter 15 umfasst ferner eine Spannungsversorgung 10. Von der Spannungsversorgung 10 führen Leitungen in den von dem Schutzgehäuse 1 umschlossenen Teil der Platine hinein und hinaus.

Mittels des Stromwandlers 8 kann beispielsweise Strom, der von der dreiphasigen Wechselstromzuleitung gespeist wird, derart gewandelt werden, dass eine Spannungsversorgung realisierbar ist. Die Spannungsversorgung kann beispielsweise von der Ladesäule und/oder dem Smartmeter 15 umfasste Vorrichtungen und/oder Einrichtungen mit Spannung und Strom versorgen. Als nicht-limitierendes Beispiel sei an dieser Stelle eine Anzeigevorrichtung (z. B. ein Display, nicht dargestellt) genannt, die beispielsweise einen Ladevorgang betreffende Informationen für einen Besitzer oder Nutzer eines Elektrofahrzeugs darstellen kann. Zusätzlich oder alternativ kann die Spannungsversorgung 10 vorgesehen sein, die ebenfalls von der Ladesäule und/oder dem Smartmeter 15 umfasste Vorrichtungen und/oder Einrichtungen mit Spannung und Strom versorgen kann.

Die Steuerschaltung 11 ist in der Regel ein Mikroprozessor. Weitere Bauteile der Leistungselektronik (z. B. die Kommunikationsschnittstelle 9 oder die Kryptographieschaltung 12, um einige nicht-limitierende Beispiele zu nennen), und/oder weitere Bauteile z. B. der Ladesäule (z. B. eine Anzeigevorrichtung) sind mit der Steuerschaltung 11 verbunden. Die Steuerschaltung 11 kann insbesondere Informationen (z. B. Soll-Werte), z. B. betreffend einen Ladevorgang empfangen und ein Steuersignal generieren. Auf Basis des generierten Steuersignals kann beispielsweise ein Ist-Wert, z. B. ein Ladestrom gesteuert werden. Hierzu kann beispielsweise ferner eine Messung des Ladestroms erfolgen, z. B. mittels des Stromwandlers 8. Der von dem Stromwandler 8 gemessene Ladestrom kann seitens der Steuerschaltung 11 mit einem empfangenen Soll-Wert verglichen werden und abhängig vom Vergleichsergebnis kann der Ladestrom eingestellt werden.

Mittels der Kryptographieschaltung 12 können beispielsweise von der Kommunikationsschnittstelle 9 empfangene Informationen (z. B. Soll-Werte), die verschlüsselt versandt worden sind, entschlüsselt werden. Ferner können mittels der Kryptographieschaltung 12 beispielsweise Informationen, die beispielsweise an eine zentrale Einheit (z. B. Warte) des Stromnetzes versendet werden sollen, vor dem Versand verschlüsselt werden. Dies kann insbesondere eine Manipulation der Informationen, auf deren Basis eine zentrale Einheit (z. B. eine Warte) des Stromnetzes beispielsweise ein Lastmanagement des Stromnetzes steuert und/oder regelt, wirksam vermeiden.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich ist oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patenansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 1: Schutzgehäuse
- 2: Platine
- 3: Stromzähler
- 4: oberseitige Teil eines Schutzgehäuses
- 5: unterseitige Teil eines Schutzgehäuses
- 6: Öffnung
- 7: Verbindungselement
- 8: Stromwandler
- 9: Kommunikationsschnittstelle
- 10: Spannungsversorgung
- 11: Steuerungsschaltung
- 12: Kryptographieschaltung
- 13: Zuleitung
- 14: Ableitung
- 15: Smartmeter

## Patentansprüche

1. Schutzgehäuse (1) für einen auf einer Platine (2) angeordneten Stromzähler (3), wobei die Platine (2) von einer Ladesäule für Elektrofahrzeuge umfasst ist, und mittels des Stromzählers (3) die während eines Ladevorgangs verbrauchte elektrische Energie erfassbar ist,
**dadurch gekennzeichnet, dass**
das Schutzgehäuse (1) dazu eingerichtet ist, die Platine (2) sowohl auf der Unterseite als auch auf der Oberseite zumindest teilweise zu umschließen, wobei das Schutzgehäuse (1) weiter dazu eingerichtet ist, den Stromzähler (3) manipulationssicher zu umschließen, so dass das Schutzgehäuse (1) nach einem Anordnen nicht beschädigungsfrei von der Platine (2) lösbar ist.

2. Schutzgehäuse (1) nach Anspruch 1, wobei auf der Platine (2) zumindest eine Leistungselektronik angeordnet ist, die von dem Schutzgehäuse (1) beidseitig von einem oberseitigen Teil des Schutzgehäuses und von einem unterseitigen Teil des Schutzgehäuses zumindest teilweise umschlossen ist.

3. Schutzgehäuse (1) nach einem der vorhergehenden Ansprüche, wobei der oberseitige Teil (4) des Schutzgehäuses und der unterseitige Teil (5) des Schutzgehäuses über eine oder mehrere Öffnungen (6) in der Platine (2) miteinander verbunden sind.

4. Schutzgehäuse (1) nach einem der vorhergehenden Ansprüche, wobei der oberseitige Teil (4) des Schutzgehäuses und der unterseitige Teil (5) des Schutzgehäuses mittels zumindest eines Verbindungselementes (7) miteinander verbunden sind, wobei nach dem erstmaligen Herstellen der Verbindung mittels des zumindest einen Verbindungselementes (7) die Verbindung nicht zerstörungsfrei trennbar ist.

5. Schutzgehäuse (1) nach Anspruch 4, wobei das zumindest eine Verbindungselement ein zapfenartiges Element oder ein clipsartiges Element ist.

6. Schutzgehäuse (1) nach Anspruch 4 oder Anspruch 5, wobei das zumindest eine Verbindungselement ein Klebstoff oder eine Schweißnaht ist.

7. Schutzgehäuse (1) nach einem der vorhergehenden Ansprüche, wobei das Schutzgehäuse (1) einen Kunststoff umfasst.

8. Schutzgehäuse (1) nach einem der vorhergehenden Ansprüche, wobei der von dem Schutzgehäuse (1) umschlossene Stromzähler (3) mittels einer Berührungslosen Messung auslesbar ist.

9. Schutzgehäuse (1) nach einem der vorhergehenden Ansprüche, wobei das Schutzgehäuse (1) derart MID-konform ausgebildet ist, dass die Platine (2) ein spritzgegossenes Kunststoffbauteil ist, welches aufgebrachte metallische Leiterbahnen umfasst, die durch das zumindest teilweise Umschließen von dem Schutzgehäuse (1) in ihrer Funktion nicht beeinträchtigt sind.

10. Schutzgehäuse (1) nach einem der vorhergehenden Ansprüche, wobei die Platine (2) zumindest eines der folgenden Bauteile umfasst:
(i) Stromwandler (8) zur (a) Messung und (b) zum Überwachen der Ladeströme;
(ii) Kommunikationsschnittstelle (9);
(iii) Spannungsversorgung (10);
(iv) Steuerungsschaltung (11);
(v) Kryptographieschaltung (12);
(vi) oder eine Kombination hiervon.

11. Schutzgehäuse (1) nach einem der vorhergehenden Ansprüche, wobei die Platine (2) zur Stromführung von 32 A bis 250 A, insbesondere von 50 A bis 150 A, bevorzugt von 75 A bis 100 A ausgebildet ist.

12. Schutzgehäuse (1) nach einem der vorhergehenden Ansprüche, wobei eine oder mehrere Zuleitungen (13) und/oder eine oder mehrere Ableitungen (14) der Platine (2) mit zumindest einem von dem Schutzgehäuse (1) zumindest teilweise umschlossenen Bauteil verbunden sind.

13. Schutzgehäuse (1) nach einem Ansprüche 10 bis 12, wobei der Stromzähler (3) derart von der Kommunikationsschnittstelle (9) getrennt ist, dass ein elektronischer Zugriff auf den Stromzähler (3) nicht möglich ist.

14. Smartmeter (15), umfassend zumindest ein Schutzgehäuse (1) nach einem Ansprüche 1 bis 13.

## Claims

1. Protective housing (1) for an electricity meter (3) arranged on a circuit board (2), wherein the circuit board (2) is comprised by a charging station for electric vehicles, and the electrical energy consumed during a charging process is detectable by means of the electricity meter (3),
**characterised in that**
the protective housing (1) is set up to at least partially enclose the circuit board (2) both on the bottom side and on the top side, the protective housing (1) further being set up to enclose the electricity meter (3) in a tamper-proof manner, so that the protective housing (1) is not detachable from the circuit board (2) without damage after it has been arranged.

2. Protective housing (1) according to claim 1, wherein at least one power electronics is arranged on the circuit board (2), which is at least partially enclosed by the protective housing (1) on both sides by a top part of the protective housing and by a bottom part of the protective housing.

3. Protective housing (1) according to one of the preceding claims, wherein the top part (4) of the protective housing and the bottom part (5) of the protective housing are connected to each other via one or more openings (6) in the circuit board (2).

4. Protective housing (1) according to one of the preceding claims, wherein the top part (4) of the protective housing and the bottom part (5) of the protective housing are connected to one each other by means of at least one connecting element (7), wherein after the connection has been made for the first time by means of the at least one connecting element (7), the connection is not separable in a non-destructive manner.

5. Protective housing (1) according to claim 4, wherein the at least one connecting element is a pin-like element or a clip-like element.

6. Protective housing (1) according to claim 4 or claim 5, wherein the at least one connecting element is an adhesive or a weld seam.

7. Protective housing (1) according to one of the preceding claims, wherein the protective housing (1) comprises a plastic.

8. Protective housing (1) according to one of the preceding claims, wherein the electricity meter (3) enclosed by the protective housing (1) is readable by means of contactless measurement.

9. Protective housing (1) according to one of the preceding claims, wherein the protective housing (1) is designed to be MID-compliant in such a way that the circuit board (2) is an injection-moulded plastic component which comprises applied metallic conductor tracks whose function is not impaired by being at least partially enclosed by the protective housing (1).

10. Protective housing (1) according to one of the preceding claims, wherein the circuit board (2) comprises at least one of the following components:
(i) Current transformers (8) for (a) measuring and (b) monitoring the charging currents;
(ii) Communication interface (9);
(iii) Power supply (10);
(iv) Control circuit (11);
(v) Cryptography circuit (12);
(vi) or a combination thereof.

11. Protective housing (1) according to one of the preceding claims, wherein the printed circuit board (2) is designed to conduct current from 32 A to 250 A, in particular from 50 A to 150 A, preferably from 75 A to 100 A.

12. Protective housing (1) according to one of the preceding claims, wherein one or more supply lines (13) and/or one or more discharge lines (14) of the circuit board (2) are connected to at least one component at least partially enclosed by the protective housing (1).

13. Protective housing (1) according to one of the claims 10 to 12, wherein the electricity meter (3) is separated from the communication interface (9) in such a way that electronic access to the electricity meter (3) is not possible.

14. A smart meter (15) comprising at least one protective housing (1) according to any one of claims 1 to 13.

## Revendications

1. Boîtier de protection (1) destiné à un compteur de courant (3) disposé sur une platine (2), dans lequel la platine (2) est entourée d'une borne de charge pour véhicules électriques et au moyen du compteur de courant (3), l'énergie électrique consommée pendant un processus de charge pouvant être recensée,
**caractérisé en ce que**
le boîtier de protection (1) est prévu pour enserrer au moins partiellement la platine (2) autant sur le côté inférieur que sur le côté supérieur, le boîtier de protection (1) étant en outre prévu pour enserrer le compteur de courant (3) contre toute manipulation, de sorte que le boîtier de protection (1) après montage ne peut être enlevé de la platine (2) sans causer de détérioration.

2. Boîtier de protection (1) selon la revendication 1, dans lequel au moins une électronique de puissance est disposée sur la platine (2), laquelle est enserrée au moins partiellement par le boîtier de protection (1) des deux côtés par une partie située côté supérieur du boîtier de protection et par une partie située côté inférieur du boîtier de protection.

3. Boîtier de protection (1) selon l'une des revendications précédentes, dans lequel la partie située côté supérieur (4) du boîtier de protection et la partie située côté inférieur (5) du boîtier de protection, sont raccordées ensemble par le biais d'un ou de plusieurs orifices (6) dans la platine (2).

4. Boîtier de protection (1) selon l'une des revendications précédentes, dans lequel la partie située côté supérieur (4) du boîtier de protection et la partie située côté inférieur (5) du boîtier de protection sont raccordées ensemble au moyen d'au moins un élément de raccord (7), après la fabrication initiale du raccord au moyen du au moins un élément de raccord (7), le raccord ne pouvant être désolidarisé sans qu'il y ait destruction.

5. Boîtier de protection (1) selon la revendication 4, dans lequel le au moins un élément de raccord est un élément de type cône ou un élément de type agrafe.

6. Boîtier de protection (1) selon la revendication 4 ou la revendication 5, dans lequel le au moins un élément de raccord est une matière collante ou un cordon de soudure.

7. Boîtier de protection (1) selon l'une des revendications précédentes, dans lequel le boîtier de protection (1) comprend une matière synthétique.

8. Boîtier de protection (1) selon l'une des revendications précédentes, dans lequel le compteur de courant (3) enserré par le boîtier de protection (1) peut être lu à l'aide d'une mesure sans contact.

9. Boîtier de protection (1) selon l'une des revendications précédentes, dans lequel le boîtier de protection (1) est réalisé en conformité MID de façon que la platine (2) est un composant en matière synthétique moulé par injection, lequel comprend des pistes conductives métalliques appliquées dont les fonctions ne sont pas altérées par l'enserrement au moins partiel du boîtier de protection (1).

10. Boîtier de protection (1) selon l'une des revendications précédentes, dans lequel la platine (2) comprend au moins l'un des composants suivants :
(i) un transformateur de courant (8) pour (a) la mesure et (b) le contrôle du courant de charge;
(ii) une interface de communication (9);
(iii) une alimentation en tension (10);
(iv) un commutateur de commande (11);
(v) un commutateur cryptographique (12);
(vi) ou une combinaison de ceux-ci.

11. Boîtier de protection (1) selon l'une des revendications précédentes, dans lequel la platine (2) est réalisée pour une conduction allant de 32 A à 250 A, en particulier de 50 A à 150 A, de préférence de 75 A à 100 A.

12. Boîtier de protection (1) selon l'une des revendications précédentes, dans lequel une ou plusieurs lignes d'alimentation (13) et/ou une ou plusieurs dérivations (14) de la platine (2) sont raccordées à au moins un composant au moins partiellement enserré par le boîtier de protection (1).

13. Boîtier de protection (1) selon l'une des revendications 10 à 12, dans lequel le compteur de courant (3) est séparé de l'interface de communication (9) de sorte qu'un accès électronique au compteur de courant (3) n'est pas possible.

14. Dispositif intelligent de mesure (15) comprenant au moins un boîtier de protection (1) selon l'une des revendications 1 à 13.
